# EUROPÄISCHE PATENTSCHRIFT

(11) **EP 1 034 965 B1**
(45) Veröffentlichungstag und Bekanntmachung des Hinweises auf die Patenterteilung: **09.11.2005**
(21) Anmeldenummer: 00104203.5
(22) Anmeldetag: 01.03.2000
(51) Int. Cl.: B60K 37/02

(54) **Anzeigeeinheit mit einer Anzeigenfront und Verfahren zur Herstellung einer solchen Anzeigenfront**
Display unit with indicator surface and method of manufacturing such surface
Ensemble d'afficheur avec surface d'affichage et procédé de fabrication d'une telle surface

(30) Priorität: 08.03.1999 DE 19910241
(43) Veröffentlichungstag der Anmeldung: 13.09.2000
(73) Patentinhaber: SIEMENS AKTIENGESELLSCHAFT, 80333 München (DE)
(72) Erfinder: Friepes, Gerhard, 61231 Bad Nauheim (DE)

(56) Entgegenhaltungen:
- DE-A- 3 832 486
- DE-A- 19 514 160
- DE-A- 19 643 835

## Beschreibung

Die Erfindung betrifft eine Anzeigeeinheit, insbesondere für ein Fahrzeug, mit einer Anzeigenfront, welche mit Zeichen ausgestattet ist, die einen transparenten Abschnitt und einen von dem transparenten Abschnitt eingeschlossenen und im wesentlichen lichtundurchlässigen Abschnitt aufweisen, und die zur Beleuchtung im Durchlichtverfahren eine hinter der Anzeigenfront angeordnete Lichtquelle hat. Weiterhin betrifft die Erfindung ein Verfahren zur Herstellung einer für eine Anzeigeeinheit bestimmten Anzeigenfront.

Solche Anzeigeeinheiten werden bei heutigen Kraftfahrzeugen vielfach als Kombinationsinstrument eingesetzt und sind somit bekannt.

Die Anzeigenfront ist hierzu transparent und wird anschließend mit einer im wesentlichen lichtundurchlässigen Beschichtung versehen. Die Zeichen werden dabei ausgespart, so dass die beispielsweise als Ziffern oder Buchstaben gebildeten Zeichen in einer Negativdarstellung mittels der Lichtquelle von hinten durchleuchtet werden können. Die Zeichen bilden daher als helle Fläche gegenüber der ansonsten dunklen Anzeigenfront einen guten Kontrast und sind somit leicht ablesbar.

Eine Anzeigeeinheit mit den Merkmalen des oberbegriffs der Ansprüche 1 und 11 ist bekannt aus DE-A-19514160.

Dem sich verändernden Zeitgeschmack folgend werden zunehmend solche Anzeigenfronten gewünscht, die aus einem lichtundurchlässigen Material, wie beispielsweise Holz, hergestellt sind oder eine Oberflächenstruktur oder geschwungene Formgebung aufweisen. Um bei derart gestalteten Anzeigen die Zeichen ebenfalls durchleuchtbar zu gestalten, könnte man daran denken, entsprechende Aussparungen anzubringen.

Nachteilig erweist sich hierbei allerdings, dass verschiedene Zeichen lichtundurchlässige Abschnitte aufweisen, die von dem transparenten Abschnitt eingeschlossen sind. Solche "Inseln" treten beispielsweise bei den Ziffern "0", "4", "6", "8" oder den Buchstaben "A", "B", "D", "R" auf. Dadurch sind Stege erforderlich, um die eingeschlossenen Abschnitte in ihrer Position zu fixieren, da anderenfalls die eingeschlossenen Bereiche herausfallen würden. Diese im ständigen Sichtfeld eines Kraftfahrzeugführers liegenden Stege stören allerdings die Ablesbarkeit und bewirken einen minderwertigen Eindruck. Dies hat in der Praxis dazu geführt, dass Anzeigenfronten lediglich mit einer lichtundurchlässigen Blende kaschiert werden, während die Zeichen ausschließlich auf der transparenten Anzeigenfront aufgebracht sind.

Der Erfindung liegt das Problem zugrunde, eine Anzeigeeinheit der eingangs genannten Art so zu gestalten, dass die Anzeigenfront aus einem beliebigen, insbesondere lichtundurchlässigen Material hergestellt werden kann. Dabei sollen auch solche Zeichen, die eingeschlossene lichtundurchlässige Abschnitte aufweisen, ohne Stege auskommen. Weiterhin soll ein Verfahren zur Herstellung einer für die Anzeige bestimmten Anzeigenfront gegeben werden.

Das erstgenannte Problem wird erfindungsgemäß dadurch gelöst, dass der im wesentlichen transparente Abschnitt durch eine Durchbrechung der Anzeigenfront gebildet und der im wesentlichen lichtundurchlässige Abschnitt an einem transparenten Träger angeordnet und von einer Rückseite der Anzeigenfront mit Abstand zu einem Randbereich der Durchbrechung in diese eingesetzt ist. Hierdurch kann das Zeichen zunächst entsprechend seiner äußeren Kontur als Durchbrechung der Anzeigenfront ausgeführt werden. Der eingeschlossene, lichtundurchlässige Abschnitt wird an einem transparenten Träger angeordnet, der somit für einen Betrachter unsichtbar ist. Durch diesen Träger entfällt auch ein anderenfalls erforderlicher Steg, da der eingeschlossene Bereich ausschließlich an dem Träger fixiert ist. Weiterhin kann dadurch der lichtundurchlässige Bereich wahlweise aus dem ausgeschnittenen Abschnitt oder aus einem beliebigen anderen Material hergestellt sein.

Der Träger könnte hierzu gegen die Rückseite der Anzeigenfront anliegen. Eine besonders vorteilhafte Weiterbildung der Erfindung ist hingegen dann gegeben, wenn der Träger die Durchbrechung ausfüllt. Hierdurch verschließt der Träger die Durchbrechung und ermöglicht zugleich einen einheitlichen Abschluss des Trägers in einer Ebene mit der Anzeigenfront. Reflexionen und ungleichmäßige Lichtverteilungen können dadurch vermieden werden. Zugleich entfällt eine Stufe im Bereich der Durchbrechung zwischen der Vorderseite der Anzeigenfront und dem Träger, wodurch eine mögliche Schattenbildung vermieden und der optische Eindruck verbessert wird.

Eine andere vorteilhafte Ausführungsform ist auch dann gegeben, wenn der Träger durch die Durchbrechung hindurchragt und gegenüber einer einem Betrachter zugewandten Vorderseite der Anzeigenfront geringfügig hervortritt. Hierdurch kann ein plastischer Eindruck erreicht werden, wobei zugleich die Ablesbarkeit auch aus einem ungewöhnlich steilen Blickwinkel verbessert werden kann. Dabei kann die Oberfläche des Trägers beispielsweise auch gewölbt oder plastisch geformt sein.

Dabei könnte der Träger über die gesamte Fläche der Durchbrechung hervortreten. Besonders günstig ist hingegen eine Weiterbildung der Erfindung, bei der der Träger lediglich im Bereich des lichtundurchlässigen Abschnitts gegenüber der Anzeigenfront hervortritt. Hierdurch kann der Träger zunächst von hinten durch die Durchbrechung eingesetzt werden. Der gegenüber der Anzeigenfront hervortretende Abschnitt braucht dann lediglich mit einer lichtundurchlässigen Beschichtung versehen oder die Oberfläche entsprechend bearbeitet werden. Zugleich wird durch den optisch abgestuften, lichtundurchlässigen Bereich die Ablesbarkeit weiter verbessert. Außerdem kann so in einfacher Weise eine der Durchbrechung exakt zugeordnete, z. B. zentrische, Anordnung des lichtundurchlässigen Abschnitts sichergestellt werden.

Eine andere besonders günstige Ausführungsform ist auch dann gegeben, wenn der lichtundurchlässige Abschnitt durch eine auf dem Träger angeordnete Abdeckung gebildet ist. Diese Abdeckung kann beispielsweise auch der zuvor ausgeschnittene Teil der Durchbrechung sein, so dass ein homogenes Erscheinungsbild erreicht wird. Weiterhin kann durch eine entsprechende Gestaltung der Abdeckung, beispielsweise als Abdeckkappe, die Montage wesentlich erleichtert werden.

Besonders empfehlenswert ist hierbei eine Ausgestaltung der Erfindung, bei der der lichtundurchlässige Abschnitt und die Anzeigenfront eine weitgehend übereinstimmende Farbgebung aufweisen. Für den Betrachter der Anzeigeeinheit ist dadurch auch bei Verwendung unterschiedlicher Materialien ein Unterschied zwischen dem lichtundurchlässigen Abschnitt und der Anzeigenfront nicht erkennbar.

Eine besonders vorteilhafte Ausführungsform der Erfindung ist dann gegeben, wenn der Träger aus einem transparenten Kunststoff hergestellt ist. Der Kunststoff ist leicht formbar und kann somit sowohl der Anzeigenfront als auch den Durchbrechungen optimal angepasst werden, so dass die Herstellung wesentlich vereinfacht wird. Insbesondere kann der Träger zugleich auch zur Verwendung bei mehreren Durchbrechungen ausgeführt sein und hierbei mit gegebenenfalls unterschiedlich dicken Abschnitten ausgestattet sein.

Eine besonders ansprechende Gestaltung der Anzeigeeinheit lässt sich dadurch erreichen, dass der Träger eine Einfärbung aufweist. Dabei treten die Zeichen durch ihre Einfärbung optisch hervor und sind dadurch leicht abzulesen. Dabei sind in verschiedenen Bereichen des Trägers auch unterschiedliche Einfärbungen realisierbar.

Eine andere besonders günstige Weiterbildung der Erfindung ist dann erreicht, wenn der Träger diffus transparent ist. Hierdurch wird eine über die gesamte Fläche der Durchbrechung gleichmäßige Lichtverteilung erreicht, wobei zugleich eine Blendung des Betrachters durch die Lichtquelle verhindert werden kann. Der Träger kann hierzu beispielsweise aus einem Rauchglas oder Milchglas hergestellt sein.

Der Träger kann als separates Formteil hergestellt werden und je nach Ausstattungsvariante der Anzeigeeinheit mit der Anzeigenfront verbunden werden. Besonders einfach ist auch eine Ausführungsform der Erfindung, bei der der transparente Träger eine mit der Anzeigenfront einteilig verbundene Scheibe ist. Diese ermöglicht eine einfache Herstellung und hat einen geringen Platzbedarf. Der Träger kann dabei zugleich auch zur mechanischen Stabilisierung der Anzeigenfront dienen, so dass zur Herstellung auch solche Materialien verwendet werden können, die eine geringe Formstabilität aufweisen. Beispielsweise können dabei auch Stoffe, Gewebe, Furniere oder auch dünne Folien verwendet werden.

Der Träger kann dabei zugleich auch als Lichtleiter ausgeführt sein, um so die Beleuchtung zu vereinfachen.

Das zweitgenannte Problem, die Schaffung eines Verfahrens zur Herstellung einer für eine Anzeigeeinheit bestimmten Anzeigenfront, welche mit Zeichen ausgestattet ist, die einen transparenten Abschnitt und einen von dem transparenten Abschnitt eingeschlossenen und im wesentlichen lichtundurchlässigen Abschnitt aufweisen, wird erfindungsgemäß dadurch gelöst, dass in einem ersten Schritt Durchbrechungen, die den transparenten Abschnitt bilden, an der Anzeigenfront angebracht werden und anschließend der an einem transparenten Träger angeordnete lichtundurchlässige Abschnitt von einer Rückseite der Anzeigenfront mit Abstand zu einem Randbereich der Durchbrechung in diese eingesetzt wird. Durch dieses Verfahren ist es möglich, die Anzeigenfront aus einem beliebigen, insbesondere lichtundurchlässigen Material herzustellen und dennoch auf Verbindungsstege zwischen dem eingeschlossenen, lichtundurchlässigen Abschnitt des Zeichens und der Anzeigenfront zu verzichten. Hierbei dient der transparente Träger der Positionierung und Fixierung des lichtundurchlässigen Abschnitts mit dem erforderlichen Abstand zu dem Randbereich der Durchbrechung. Der Träger selbst ist dabei für einen Betrachter unsichtbar.

Der Träger kann ein Formteil sein, welches nach dem Anbringen der Durchbrechung an der Rückseite der Anzeigenfront angeordnet wird. Besonders gut geeignet ist hingegen eine Ausführungsform des erfindungsgemäßen Verfahrens, bei dem der Träger durch Hinterspritzen der Anzeigenfront mit einem transparenten Kunststoff, insbesondere Acrylglas, hergestellt wird. Hierdurch kann der Träger an unterschiedlich geformte Anzeigenfronten optimal angepasst werden und ermöglicht zugleich eine Erhöhung der mechanischen Belastbarkeit der so geschaffenen Baueinheit. Dabei können auch unterschiedliche Materialstärken sowie verschiedene Farbgebungen realisiert werden, mit denen der Einsatzbereich wesentlich erweitert wird. Zugleich kann durch das Hinterspritzen der Fertigungsaufwand reduziert werden und das optische Erscheinungsbild durch einen toleranzfreien Übergang zwischen dem Trägermaterial und der Anzeigenfront im Bereich der Durchbrechung erreicht werden.

Besonders einfach ist auch eine Ausgestaltung des Verfahrens, bei dem die Durchbrechungen ausgestanzt werden. Die so geschaffene Durchbrechung ist mit einer hohen Genauigkeit reproduzierbar und weist vor allem im Randbereich der Durchbrechung eine einwandfreie Oberflächenbeschaffenheit auf. Weiterhin ist es dadurch möglich, den ausgestanzten Abschnitt wiederzuverwenden, indem dieser zunächst mit dem Träger verbunden und anschließend mittels des Trägers in der Durchbrechung positioniert wird.

Besonders nützlich ist eine Ausführungsform der Erfindung dadurch, dass der Träger lediglich im Bereich des lichtundurchlässigen Abschnitts gegenüber der Anzeigenfront hervorspringend mit der Anzeigenfront verbunden wird. Dadurch wird einerseits die Ablesbarkeit des so geschaffenen Zeichens durch den plastischen Eindruck verbessert, andererseits kann dadurch der lichtundurchlässige Abschnitt problemlos nach dem Anbringen des Trägers, insbesondere auch nach dem Hinterspritzen, von der Vorderseite aus angebracht werden.

Der lichtundurchlässige Abschnitt des Trägers kann durch eine aufsetzbare Abdeckung geschaffen werden. Eine besonders vorteilhafte Ausgestaltung des erfindungsgemäßen Verfahrens ist hingegen dann erreicht, wenn der lichtundurchlässige Abschnitt des Trägers durch Auftragen einer Beschichtung hergestellt wird. Dadurch kann der Montageaufwand vereinfacht werden und zugleich wahlweise eine individuelle Beschichtung je nach Variante angebracht werden.

Dabei ist das Verfahren dann besonders einfach ausgeführt, wenn der lichtundurchlässige Abschnitt des Trägers im Siebdruckverfahren aufgedruckt wird. Dadurch kann der lichtundurchlässige Abschnitt ebenso einfach wie auch problemlos angebracht werden, wobei die hohe Qualität des Siebdruckverfahrens eine optimale Oberflächenbeschaffenheit über die gesamte Betriebsdauer hinweg sicherstellt. Bei einem Hervorspringen des lichtundurchlässigen Abschnitts des Trägers gegenüber der Anzeigenfront kann der lichtundurchlässige Abschnitt sehr einfach bedruckt werden, ohne daß besondere Vorkehrungen zur Verhinderung einer unbeabsichtigten Bedruckung der Anzeigenfront getroffen werden müßten.

Die erfindungsgemäße Vorrichtung und das Verfahren zur Herstellung der Vorrichtung lassen verschiedene Abwandlungen zu. Zur weiteren Verdeutlichung der Erfindung wird nachfolgend auf die Zeichnung Bezug genommen. Diese zeigt in
- Fig. 1: eine Vorderansicht einer erfindungsgemäßen Anzeigeeinheit mit einer Anzeigenfront,
- Fig. 2: eine vergrößerte Darstellung eines Abschnitts der Anzeigenfront mit verschiedenen Zeichen,
- Fig. 3: eine entlang der Linie II-II der Figur 2 geschnittene Ansicht der Anzeigenfront mit einem Träger.

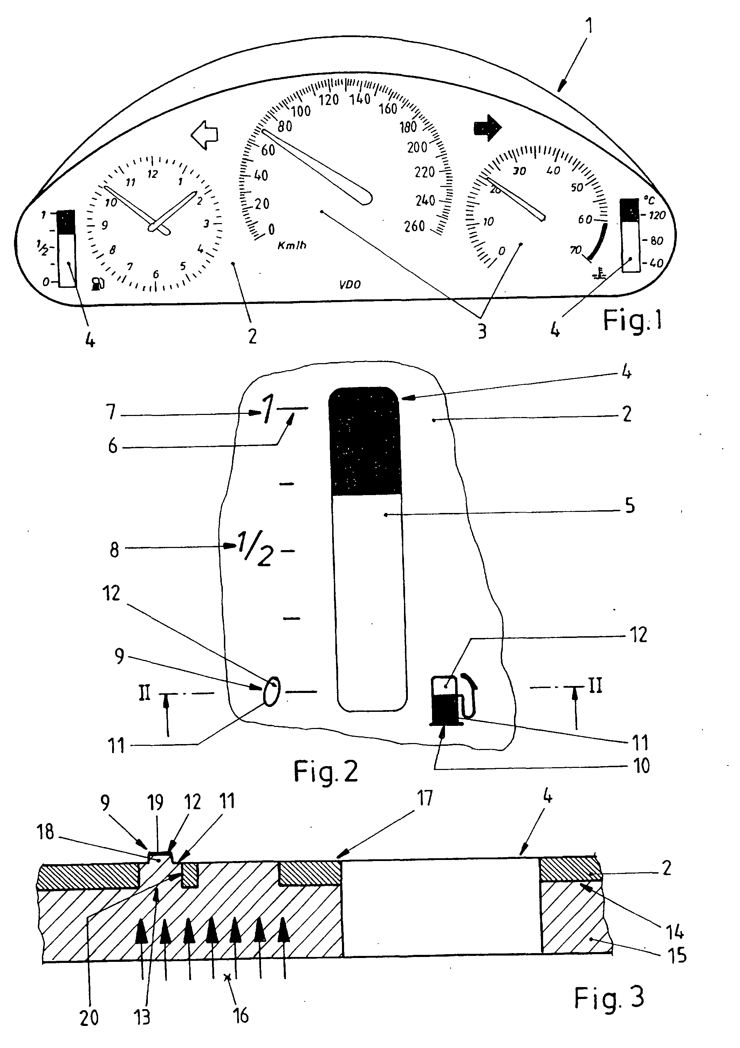

Figur 1 zeigt in einer Vorderansicht eine erfindungsgemäße Anzeigeeinheit 1 mit einer Anzeigenfront 2. Die Anzeigeeinheit 1 hat mehrere Rundinstrumente 3 und weitere Anzeigen 4.

Eine dieser Anzeigen 4 zeigt Figur 2 in einer vergrößerten Darstellung eines Abschnitts der Anzeigefront 2. Die als Kraftstoffanzeige ausgeführte Anzeige 4 hat einen Bandzeiger 5, der den Füllzustand anzeigt. Hierzu dient eine Skalierung 6 mit mehreren Zeichen 7, 8, 9. Weiterhin hat die Anzeige 4 ein als stilisierte Zapfsäule gestaltetes Zeichen 10 zur leichteren Zuordnung der Anzeige 4. Für die Erfindung wesentlich sind die Zeichen 9 und 10. Diese weisen jeweils einen in Fig. 2 dunkel dargestellten, durchleuchtbaren transparenten Abschnitt 11 und einen von dem transparenten Abschnitt 11 eingeschlossenen lichtundurchlässigen Abschnitt 12 auf.

Der Aufbau des durch die Ziffer "0" gebildeten Zeichens 9 der Anzeige 4 wird in Figur 3 deutlich. Diese zeigt eine entlang der Linie II-II der Figur 2 geschnittene Darstellung der Anzeigenfront 2. Zu erkennen ist eine durch die Kontur des Zeichens 9 bestimmte Durchbrechung 13 der Anzeigenfront 2. In diese Durchbrechung 13 eingesetzt ist ein mit einer Rückseite 14 der Anzeigenfront 2 verbundener transparenter Träger 15. Symbolhaft mit Pfeildarstellungen 16 ist das durch den Träger 15 hindurchtretende Licht einer nicht gezeigten Lichtquelle dargestellt. Dieses Licht tritt nun an einer Vorderseite 17 der Durchbrechung 13 für einen Betrachter sichtbar aus. Dabei ist der von dem transparenten Abschnitt 11 eingeschlossene, lichtundurchlässige Abschnitt 12 durch einen gegenüber der Anzeigenfront 2 vorspringenden Bereich 18 des Trägers 15 gebildet, welcher hierzu mit einer Abdeckung 19 versehen ist. Diese insbesondere farblich auf die Anzeigenfront 2 abgestimmte Abdeckung 19 ermöglicht somit eine Anordnung des lichtundurchlässigen Abschnitts 12 mit Abstand zu einem Randbereich 20 der Durchbrechung 13, ohne dass hierzu Verbindungsstege zwischen dem lichtundurchlässigen Abschnitt 12 und der Anzeigenfront 2 erforderlich sind. Zugleich entsteht ein plastischer Eindruck des Zeichens 9, wodurch eine einfache Ablesbarkeit erreicht wird.

## Patentansprüche

1. Anzeigeeinheit, insbesondere für ein Fahrzeug, mit einer Anzeigenfront, welche mit Zeichen ausgestattet ist, die einen transparenten Abschnitt und einen von dem transparenten Abschnitt eingeschlossenen und im wesentlichen lichtundurchlässigen Abschnitt aufweisen, und die zur Beleuchtung im Durchlichtverfahren eine hinter der Anzeigenfront angeordnete Lichtquelle hat, **dadurch gekennzeichnet, dass** der im wesentlichen transparente Abschnitt (11) durch eine Durchbrechung (13) der Anzeigenfront (2) gebildet und der im wesentlichen lichtundurchlässige Abschnitt (12) an einem transparenten Träger (15) angeordnet und von einer Rückseite (14) der Anzeigenfront (2) mit Abstand zu einem Randbereich (20) der Durchbrechung (13) in diese eingesetzt ist.

2. Anzeigeeinheit nach Anspruch 1, **dadurch gekennzeichnet, dass** der Träger (15) die Durchbrechung (13) ausfüllt.

3. Anzeigeeinheit nach Anspruch 1 oder 2, **dadurch gekennzeichnet, dass** der Träger (15) durch die Durchbrechung (13) hindurchragt und gegenüber einer einem Betrachter zugewandten Vorderseite (17) der Anzeigenfront (2) geringfügig hervortritt.

4. Anzeigeeinheit nach einem der vorhergehenden Ansprüche, **dadurch gekennzeichnet, dass** der Träger (15) lediglich im Bereich des lichtundurchlässigen Abschnitts (12) gegenüber der Anzeigenfront (2) hervortritt.

5. Anzeigeeinheit nach einem der vorhergehenden Ansprüche, **dadurch gekennzeichnet, dass** der lichtundurchlässige Abschnitt (12) durch eine auf dem Träger (15) angeordnete Abdeckung (19) gebildet ist.

6. Anzeigeeinheit nach einem der vorhergehenden Ansprüche, **dadurch gekennzeichnet, dass** der lichtundurchlässige Abschnitt (12) und die Anzeigenfront (2) eine weitgehend übereinstimmende Farbgebung aufweisen.

7. Anzeigeeinheit nach einem der vorhergehenden Ansprüche, **dadurch gekennzeichnet, dass** der Träger (15) aus einem transparenten Kunststoff hergestellt ist.

8. Anzeigeeinheit nach einem der vorhergehenden Ansprüche, **dadurch gekennzeichnet, dass** der Träger (15) eine Einfärbung aufweist.

9. Anzeigeeinheit nach einem der vorhergehenden Ansprüche, **dadurch gekennzeichnet, dass** der Träger (15) diffus transparent ist.

10. Anzeigeeinheit nach einem der vorhergehenden Ansprüche, **dadurch gekennzeichnet, dass** der transparente Träger (15) eine mit der Anzeigenfront (2) einteilig verbundene Scheibe ist.

11. Verfahren zur Herstellung einer für eine Anzeigeeinheit bestimmten Anzeigenfront, welche mit Zeichen ausgestattet ist, die einen transparenten Abschnitt und einen von dem transparenten Abschnitt eingeschlossenen und im wesentlichen lichtundurchlässigen Abschnitt aufweisen, **dadurch gekennzeichnet, dass** in einem ersten Schritt Durchbrechungen, die den transparenten Abschnitt bilden, an der Anzeigenfront angebracht werden und anschließend der an einem transparenten Träger angeordnete lichtundurchlässige Abschnitt von einer Rückseite der Anzeigenfront mit Abstand zu einem Randbereich der Durchbrechung in diese eingesetzt wird.

12. Verfahren nach Anspruch 11, **dadurch gekennzeichnet, dass** der Träger durch Hinterspritzen der Anzeigenfront mit einem transparenten Kunststoff, insbesondere Acrylglas, hergestellt wird.

13. Verfahren nach Anspruch 11 oder 12, **dadurch gekennzeichnet, dass** die Durchbrechungen ausgestanzt werden.

14. Verfahren nach einem der Ansprüche 11 bis 13, **dadurch gekennzeichnet, dass** der Träger lediglich im Bereich des lichtundurchlässigen Abschnitts gegenüber der Anzeigenfront hervorspringend mit der Anzeigenfront verbunden wird.

15. Verfahren nach einem der Ansprüche 11 bis 14, **dadurch gekennzeichnet, dass** der lichtundurchlässige Abschnitt des Trägers durch Auftragen einer Beschichtung herdestellt wird.

16. Verfahren nach Anspruch 15, **dadurch gekennzeichnet, dass** der lichtundurchlässige Abschnitt des Trägers im Siebdruckverfahren aufgedruckt wird.

## Claims

1. Display unit, in particular for a vehicle, with a front instrument panel which is provided with symbols which have a transparent portion and a portion which is enclosed by the transparent portion and is substantially opaque, and which has a light source arranged behind the front instrument panel for illuminating by the transmitted light method, **characterized in that** the substantially transparent portion (11) is formed by an opening (13) in the front instrument panel (2) and the substantially opaque portion (12) is arranged on a transparent backing (15) and fitted into the opening (13) from a rear side (14) of the front instrument panel (2), at a distance from an edge region (20) of said opening.

2. Display unit according to Claim 1, **characterized in that** the backing (15) fills the opening (13).

3. Display unit according to Claim 1 or 2, **characterized in that** the backing (15) protrudes through the opening (13) and stands out slightly from a front side (17) of the front instrument panel (2) facing a viewer.

4. Display unit according to one of the preceding claims, **characterized in that** the backing (15) stands out from the front instrument panel (2) only in the region of the opaque portion (12).

5. Display unit according to one of the preceding claims, **characterized in that** the opaque portion (12) is formed by a covering (19) arranged on the backing (15).

6. Display unit according to one of the preceding claims, **characterized in that** the opaque portion (12) and the front instrument panel (2) have largely coinciding colouring.

7. Display unit according to one of the preceding claims, **characterized in that** the backing (15) is produced from a transparent plastic.

8. Display unit according to one of the preceding claims, **characterized in that** the backing (15) is coloured.

9. Display unit according to one of the preceding claims, **characterized in that** the backing (15) is diffusely transparent.

10. Display unit according to one of the preceding claims, **characterized in that** the transparent backing (15) is a plate joined in one part to the front instrument panel (2).

11. Process for producing a front instrument panel which is intended for a display unit and is provided with symbols which have a transparent portion and a substantially opaque portion enclosed by the transparent portion, **characterized in that**, in a first step, openings which form the transparent portion are provided on the front instrument panel and subsequently the opaque portion, arranged on a transparent backing, is fitted into the opening from a rear side of the front instrument panel at a distance from an edge region of said opening.

12. Process according to Claim 11, **characterized in that** the backing is produced by film-insert moulding a transparent plastic, in particular acrylic glass, behind the front instrument panel.

13. Process according to Claim 11 or 12, **characterized in that** the openings are punched out.

14. Process according to one of Claims 11 to 13, **characterized in that** the backing is joined to the front instrument panel such that it stands out from the front instrument panel only in the region of the opaque portion.

15. Process according to one of Claims 11 to 14, **characterized in that** the opaque portion of the backing is produced by applying a coating.

16. Process according to Claim 15, **characterized in that** the opaque portion of the backing is printed on by the screen printing process.

## Revendications

1. Bloc d'affichage destiné, notamment, à un véhicule et comportant un panneau d'affichage doté de signes, qui a une partie transparente et une partie encerclée par la partie transparente et, pour l'essentiel, opaque et qui a une source de lumière disposée derrière le panneau d'affichage et destinée à l'éclairage par transparence, **caractérisé par le fait que** la partie (11) qui est essentiellement transparente est formée par un évidement (13) du panneau d'affichage (2) et que la partie (12) essentiellement opaque est placée sur un support transparent (15) et est, à partir d'un côté arrière (14) du panneau d'affichage (2), insérée, avec un certain écart par rapport à une zone de bordure (20) de l'évidement (13), dans cet évidement (13).

2. Bloc d'affichage selon la revendication 1 **caractérisé par le fait que** le support (15) remplit l'évidement (13).

3. Bloc d'affichage selon la revendication 1 ou 2 **caractérisé par le fait que** le support (15) fait saillie à travers l'évidement (13) et dépasse légèrement par rapport à une face avant (17) du panneau d'affichage (2) tournée vers un observateur.

4. Bloc d'affichage selon l'une des revendications précédentes **caractérisé par le fait que** le support (15) fait saillie du panneau d'affichage (2) seulement dans la zone de la partie opaque (12).

5. Bloc d'affichage selon l'une des revendications précédentes **caractérisé par le fait que** la partie opaque (12) est formée par une couverture (19) disposée sur le support (15).

6. Bloc d'affichage selon l'une des revendications précédentes **caractérisé par le fait que** la partie opaque (12) et le panneau d'affichage (2) ont une coloration largement concordante.

7. Bloc d'affichage selon l'une des revendications précédentes **caractérisé par le fait que** le support (15) est fabriqué en matière plastique transparente.

8. Bloc d'affichage selon l'une des revendications précédentes **caractérisé par le fait que** le support (15) a une coloration.

9. Bloc d'affichage selon l'une des revendications précédentes **caractérisé par le fait que** le support (15) est transparent d'une façon diffuse.

10. Bloc d'affichage selon l'une des revendications précédentes **caractérisé par le fait que** le support transparent (15) est une plaque liée, pour former une seule pièce, au panneau d'affichage (2).

11. Procédé permettant de fabriquer un panneau d'affichage destiné à un bloc d'affichage et équipé de signes qui ont une partie transparente et une partie encerclée par la partie transparente et, pour l'essentiel, opaque, **caractérisé par le fait que**, au cours d'une première étape, des évidements formant la partie transparente sont apportés au panneau d'affichage et, ensuite, à partir d'un côté arrière du panneau d'affichage, la partie opaque disposée sur un support transparent est insérée, avec un certain écart par rapport à une zone de bordure de l'évidement, dans cet évidement.

12. Procédé selon la revendication 11 **caractérisé par le fait que** le support est fabriqué par injection, sur l'arrière du panneau d'affichage, de matière plastique transparente, notamment de verre acrylique.

13. Procédé selon la revendication 11 ou 12 **caractérisé par le fait que** les évidements sont estampés.

14. Procédé selon l'une des revendications 11 à 13 **caractérisé par le fait que** le support est lié au panneau d'affichage en faisant saillie par rapport au panneau d'affichage seulement dans la zone de la partie opaque.

15. Procédé selon l'une des revendications 11 à 14 **caractérisé par le fait que** la partie opaque du support est fabriquée par apport d'un revêtement en couche.

16. Procédé selon la revendication 15 **caractérisé par le fait que** la partie opaque du support est imprimée par un procédé de sérigraphie.
